(19) Europäisches Patentamt
European Patent Office
Office européen des brevets

(11) **EP 2 164 182 A1**

(12) **EUROPEAN PATENT APPLICATION**

(43) Date of publication:
**17.03.2010 Bulletin 2010/11**

(51) Int Cl.:
*H04B 1/707* (2006.01)    *H04J 11/00* (2006.01)

(21) Application number: **09166344.3**

(22) Date of filing: **24.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **10.09.2008 JP 2008231622**

(71) Applicant: **Fujitsu Limited**
**Kawasaki-shi, Kanagawa 211-8588 (JP)**

(72) Inventors:
• **Hozumi, Kanji**
**Kawasaki-shi Kanagawa 211-8588 (JP)**
• **Okada, Yukihiro**
**Kawasaki-shi Kanagawa 211-8588 (JP)**
• **Komagata, Yuichi**
**Kawasaki-shi Kanagawa 211-8588 (JP)**

(74) Representative: **Ward, James Norman**
**Haseltine Lake LLP**
**Lincoln House, 5th Floor**
**300 High Holborn**
**London WC1V 7JH (GB)**

(54) **Receiving apparatus and communication control method**

(57)    A receiving apparatus for stopping intermittently reception processing including path detection, the receiving apparatus includes a control portion for shifting a window having a predetermined time width indicating a section in which the path detection is performed from a position before a reception stop in accordance with a state of travel of the receiving apparatus before the reception stop, and a path detecting portion for performing the path detection processing on a receive signal within the section expressed by the window after shifted by the control portion, after a lapse of the reception stop period.

FIG. 1

EP 2 164 182 A1

**Description**

FIELD

The embodiments discussed herein are related to receive apparatus and communication control method.

BACKGROUND

Today, mobile communication systems such as cellular phone systems and wireless LANs (Local Area Networks) are widely being used. In a mobile communication system, a mobile station such as a cellular phone and a portable information terminal detects the reception timing of paths (path timing) from a wireless base station to the mobile station by path detection. A mobile station can demodulate and decode a receive signal on the basis of the detected path timing. The path detection may include setting the window defining a section on a time axis and performing detection processing on the receive signal within the section expressed by the window.

By the way, some mobile stations may operate in an intermittent reception mode during a standby period when no communication is performed. In the intermittent reception mode, the stop (or sleep) and restart (or wake-up) of the reception processing including the path detection are repeated. A mobile station upon woken-up determines the presence of the communication to its own station on the basis of the receive signal. If it determines that no communication is destined to its own station, it sleeps again. If it is determined that some communication is destined to its own station, it cancels the intermittent reception mode. By stopping the reception processing intermittently, the power for the mobile station can be saved.

Here, after a lapse of the sleep period, the path timing may largely differ from the one before the sleep. Thus, when the path detection is performed by keeping the window at the position before the sleep, the detection processing may possibly fail. For such a problem of the path detection, a method has been proposed that increases the window width in advance in accordance with the change in center of balance of the path timing detected in the past (refer to Patent Document 1: Japanese Laid-open Patent Publication No. 2004-40613, for example). Another method has been proposed that omits the path detection after a lapse of the sleep period and demodulates a receive signal plural times (refer to Patent Document 2: Japanese Laid-open Patent Publication No. 2005-73102, for example). Another method has been proposed that does not perform the sleep or that shortens the sleep period to less than the normal one while the mobile station is traveling fast (refer to Patent Document 3: Japanese Laid-open Patent Publication No. 2007-174329, for example).

However, the aforesaid methods in Patent Documents 1 to 3 have a problem that the reception processing becomes inefficient. For example, in the method disclosed in Patent Document 1, because the width of the section for the path detection is increased, the load of the detection processing increases. In the method disclosed in Patent Document 2, because the demodulating processing is performed at plural timings in parallel, the size of the circuit increases. In the method disclosed in Patent Document 3, because the sleep period is shorter, the power saving effect acquired by the intermittent reception decreases.

SUMMARY

Accordingly, it is an object in one aspect of the embodiment to provide a receiving apparatus and communication control method, which perform the path detection efficiently during the intermittent reception.

According to an aspect of the embodiment, a receiving apparatus for stopping intermittently reception processing including path detection, the receiving apparatus includes a control portion for shifting a window having a predetermined time width indicating a section in which the path detection is performed from a position before a reception stop in accordance with a state of travel of the receiving apparatus before the reception stop, and a path detecting portion for performing the path detection processing on a receive signal within the section expressed by the window after shifted by the control portion, after a lapse of the reception stop period.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

BRIEF DESCRIPTION OF DRAWINGS

Fig. 1 is a diagram illustrating a receiving apparatus;

Fig. 2 is a diagram illustrating a wireless communication system;
Fig. 3 is a block diagram illustrating a mobile station of a first embodiment;
Fig. 4 is a block diagram illustrating a path detecting portion of the first embodiment;
Fig. 5 is a block diagram illustrating a path detection control portion of the first embodiment;
Fig. 6 is a flowchart illustrating the intermittent-reception control of the first embodiment;
Fig. 7 is a flowchart illustrating the window position correction of the first embodiment;
Fig. 8 is a diagram illustrating the timing for the intermittent reception;
Fig. 9 is a diagram illustrating a first correction example of the window position;
Fig. 10 is a diagram illustrating a second correction example of the window position;
Fig. 11 is a block diagram illustrating a mobile station of a second embodiment;
Fig. 12 is a block diagram illustrating a path detection control portion of the second embodiment;
Fig. 13 is a flowchart illustrating the window position correction of the second embodiment; and
Fig. 14 is a block diagram illustrating a mobile station of a third embodiment.

DESCRIPTION OF EMBODIMENTS

With reference to drawings, an embodiment will be described in detail below.

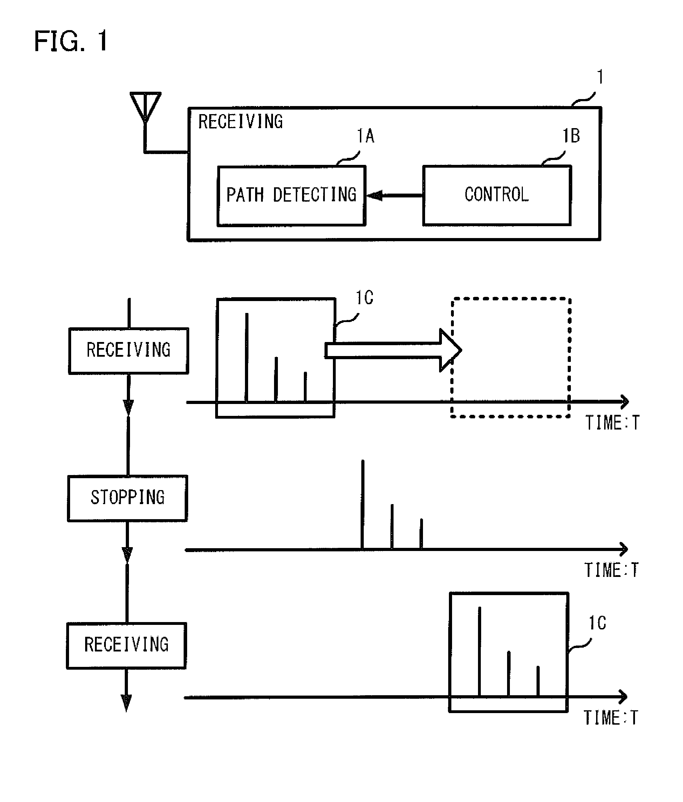

Fig. 1 is a diagram illustrating a receiving apparatus. A receiving apparatus 1 indicated in Fig. 1 has a function for an intermittent reception mode, that is, a function allowing the reception processing including path detection to be stopped intermittently. The receiving apparatus 1 has a path detecting portion 1A and a control portion 1B.

The path detecting portion 1A performs the path detection on a receive signal while reception processing is being performed. The section to undergo the path detection is the section defined by a window 1C in a predetermined time width. The position of the window 1C may be corrected by the control portion 1B. On the other hand, in a reception stop period, the path detection also stops.

The control portion 1B controls the position of the window 1C when the path detecting portion 1A restarts the path detection after a lapse of the reception stop period. More specifically, the control portion 1B shifts the window 1C from the position before the reception stop (or immediately before the reception stop, for example) in the time direction in accordance with the state of travel of the receiving apparatus 1 before the reception stop. The position of the window 1C after the shift is equal to the position of the window 1C when the path detection is restarted.

For example, the control portion 1B can acquire the velocity of travel of the receiving apparatus 1 before the reception stop and calculate the amount of shift of the window 1C on the basis of the velocity of travel. The method for acquiring the velocity of travel may be a method that determines a Doppler frequency deviation from a known signal included in a receive signal and estimates the velocity of travel from the Doppler frequency deviation. An alternative method may acquire the current position of the receiving apparatus 1, which is measured by a GPS (Global Positioning System), and acquires the velocity of travel from the amount of change in current position.

The control portion 1B can acquire the direction of travel to a wireless base station (not indicated) of the receiving apparatus 1 before the reception stop and can determine the direction of shift of the window 1C on the basis of the direction of travel. For example, when the receiving apparatus 1 approaches the wireless base station, the window 1C is shifted in the direction earlier in time. When it travels away from the wireless base station, the window 1C is shifted to the direction later in time. The method for acquiring the direction of travel may be a method that acquires the reception levels of receive signals and estimates the direction of travel from the increase or decrease in reception level. An alternative method may acquire the current positions of the receiving apparatus 1, which is measured by a GPS, and acquire the direction of travel from the change in current position.

Notably, the window 1C may be shifted before the reception stop (or immediately before the reception stop, for example) or after the restart of the reception (or immediately after the restart of the reception, for example). For example, a method may be considered that saves the window position after the shift in a storage medium before the reception stop and, after the restart of the reception, starts the path detection with the window position saved in the storage medium. An alternative method may include saving the amount of shift from the window position before the reception stop in a storage medium, correcting, after the restart of the reception, the window position before the reception stop on the basis of the amount of shift saved in the storage medium and starting the path detection.

In the receiving apparatus 1, the path detecting portion 1A performs the path detection on a receive signal within a section indicated by the window 1C in a predetermined time width. The control portion 1B shifts the window 1C from the position before the reception stop in accordance with the state of travel (such as the velocity of travel and the direction of travel to the wireless base station) of the receiving apparatus 1 before the reception stop. After a lapse of the reception stop period, the path detecting portion 1A performs the path detection on the basis of the position of the window 1C after the shift by the control portion 1B.

Thus, the path detection during the intermittent reception can be performed efficiently. In other words, the receiving apparatus 1 can correct the position of the window 1C properly in advance for the time when the path detection is restarted. Hence, even when the path timing largely changes during the stop period in the reception processing, like while the receiving apparatus 1 is traveling fast, for example, the detection processing can be performed in proper timing upon restart of the path detection. In other words, the probability can be reduced that the path timing shifts off the section of the window 1c and the path detection fails. Furthermore, the power consumption and/or the size of circuit can be suppressed, compared with the method that increases the window width and the method that shortens the reception stop period.

The case where the function of the receiving apparatus 1 is applied to a mobile station of a wireless communication system will be described below. For example, the wireless communication system, which will be described below can be implemented as a cellular mobile phone system, and the mobile station can be implemented as a cellular phone. However, it may be implemented as other kinds of wireless communication system, such as a wireless LAN.

First Embodiment

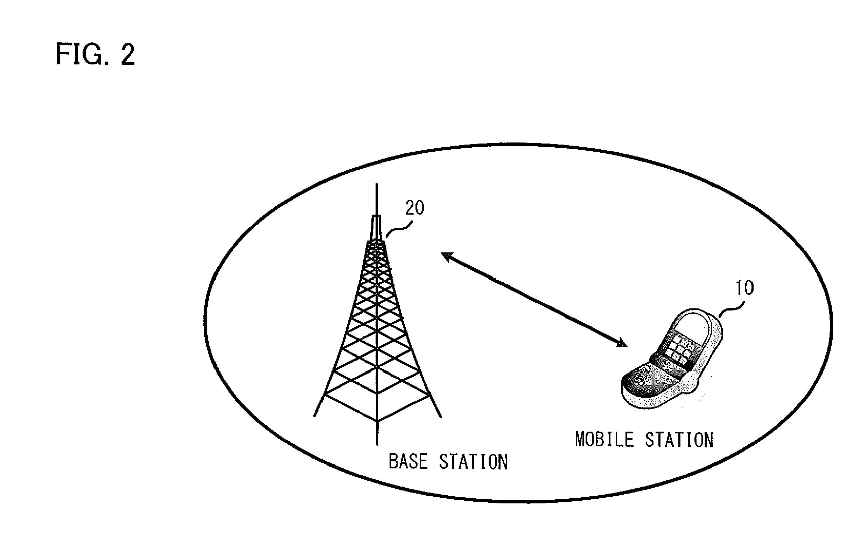

Fig. 2 is a diagram illustrating the wireless communication system. The wireless communication system includes a mobile station 10 and a wireless base station 20. The first embodiment assumes the case applying the code division multiple access (CDMA) as the communication method.

The mobile station 10 is a communication terminal apparatus that can perform wireless communication with the wireless base station 20 within a cell range of the wireless base station 20. The mobile station 10 has the intermittent reception function. In other words, the mobile station 10 repeats the sleep and the wake-up until the communication to its own station occurs during the standby period when it does not perform any communication. The presence of the communication to its own station is determined on the basis of the signal received from the wireless base station 20 when the mobile station 10 wakes up.

The wireless base station 20 is a wireless communication apparatus that can perform wireless communication with the mobile station 10. When communication to the mobile station 10 occurs, the wireless base station 20 transmits the signal including the identifier of the mobile station 10 to the inside of the cell. Notably, the wireless base station 20 can designate the timing for waking up the mobile station 10 in advance. In this case, the wireless base station 20 may transmit the signal including the identifier of the mobile station 10 in accordance with the time when the mobile station 10 wakes up.

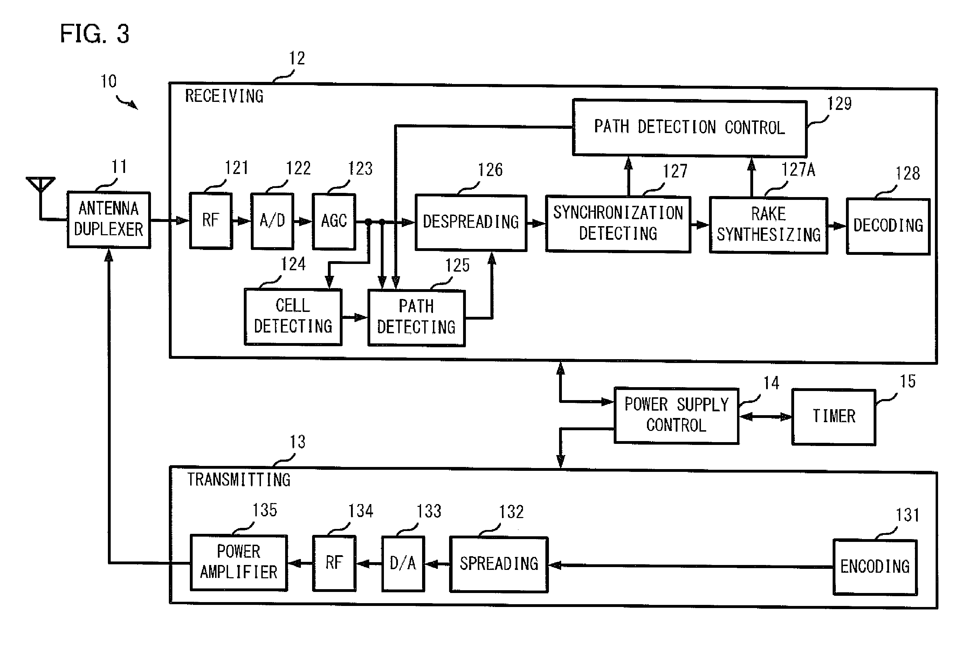

Fig. 3 is a block diagram illustrating the mobile station of the first embodiment. The mobile station 10 has an antenna duplexer 11, a receiving portion 12, a transmitting portion 13, a power supply control portion 14 and a timer portion 15. Notably, Fig. 3 mainly illustrates the modules relating to the intermittent reception function and does not illustrate the other modules as required, among the modules included in the mobile station 10.

The antenna duplexer 11 demultiplexes a receive signal and a transmit signal so as to use the antenna that the mobile station 10 has for both reception and transmission. More specifically, the antenna duplexer 11 outputs the receive signal acquired from the antenna to the receiving portion 12. The antenna duplexer 11 causes the antenna to output the transmit signal acquired from the transmitting portion 13. The antenna duplexer 11 may use a band pass filter (BPF) to demultiplex a receive signal and a transmit signal. Notably, while the antenna is used for reception and transmission in the mobile station 10, a receiving antenna and a transmitting antenna may be provided separately.

The receiving portion 12 demodulates and decodes the receive signal acquired from the antenna duplexer 11. The first embodiment applies the CDMA system as the communication method, and the receiving portion 12 despreads and demodulates the receive signal. The receiving portion 12 includes an radio frequency (RF) portion 121, an analog to digital (A/D) converting portion 122, an auto gain control (AGC) portion 123, a cell detecting portion 124, a path detecting portion 125, a despreading portion 126, a synchronization detecting portion 127, a RAKE synthesizing portion 127A, a decoding portion 128 and a path detection control portion 129. The path detecting portion 1A in Fig. 1 corresponds to the path detecting portion 125, and the control portion 1B in Fig. 1 corresponds to the path detection control portion 129.

The RF portion 121 uses a low noise amplifier (LNA), a frequency converter and/or a BPF to convert (or downconvert) a wireless signal in a high frequency band to a baseband signal in a low frequency band. Then, the RF portion 121 outputs the acquired baseband signal to the A/D converting portion 122.

The A/D converting portion 122 converts the baseband signal acquired from the RF portion 121 to a digital baseband signal. Then, the A/D converting portion 122 outputs the acquired digital baseband signal to the AGC portion 123.

The AGC portion 123 performs gain control over the digital baseband signal acquired from the A/D converting portion 122. In other words, the AGC portion 123 detects the signal level and amplifies the digital baseband signal with the amplification factor according to the signal level. Then, the AGC portion 123 outputs the acquired digital signal to the cell detecting portion 124, the path detecting portion 125 and the despreading portion 126.

The cell detecting portion 124 acquires the digital signal (which will be simply called receive signal here) after the gain control from the AGC portion 123 and performs a cell detection (which is cell search) thereon. More specifically, the cell detecting portion 124 performs despreading on the pilot signal included in the receive signal by using candidates for the spreading code. Then, the accessible cell and the spreading code number used in the cell are identified from the correlation value acquired by the despreading. After that, the cell detecting portion 124 notifies the path detecting portion 125 of the identified spreading code number .

The path detecting portion 125 acquires the receive signal from the AGC portion 123 and performs the path detection (which is path search) on the receiving portion 12. More specifically, the path detecting portion 125 despreads the pilot signal included in the receive signal by using the spreading code corresponding to the code number notified from the cell detecting portion 124. In this case, the despreading is performed by delaying the timing within the range of the defined window. Thus, the path timings of the advancing wave and a delaying wave can be identified. Then, the path detecting portion 125 notifies the despreading portion 126 of the spreading code number, the number of paths and the amounts of delay of the paths.

Here, the position of the window where the path detecting portion 125 performs the path detection is corrected properly in accordance with the path detection result. In order for the mobile station 10 to perform the intermittent reception, the position of the window is estimated and corrected before the sleep, and the position after the estimation and correction is defined as the position of the window for performing the path detection after wake-up. The details of the path detecting portion 125 will be described later.

The despreading portion 126 despreads the receive signal acquired from the AGC portion 123 for each path. In other words, the despreading portion 126 uses the spreading code corresponding to the code number notified from the path detecting portion 125 so as to perform the despreading based on the timing in accordance with the number of paths and the amounts of delay of each path notified from the path detecting portion 125. Then, the despreading portion 126 outputs the demodulated signal, which is acquired by the despreading, of each path to the synchronization detecting portion 127.

The synchronization detecting portion 127 performs channel estimation and channel compensation on the acquired demodulated signal of each path from the despreading portion 126. More specifically, the synchronization detecting portion 127 uses the known pilot signal (such as the signal of the common pilot channel) included in the demodulated signal so as to estimate the amount of phase rotation (phase difference) due to the influence, such as fading, on the propagation path. Then, in accordance with the estimated phase difference, the channels are compensated. After that, the synchronization detecting portion 127 outputs the demodulated signal after the compensation to the RAKE synthesizing portion 127A.

The RAKE synthesizing portion 127A synthesizes the demodulated signals, which are acquired from the synchronization detecting portion 127, of the paths. The RAKE synthesis may weight the demodulated signals in accordance with the paths. Then, the RAKE synthesizing portion 127A outputs the demodulated signal after the synthesis to the decoding portion 128.

The decoding portion 128 decodes the demodulated signal acquired from the RAKE synthesizing portion 127A. The encoding method for use in system may be agreed in advance between the mobile station 10 and the wireless base station 20. The decoding portion 128 outputs the decoded data to the module (not indicated) that processes the data.

The path detection control portion 129 controls the position of the window of the path detecting portion 125 when the mobile station 10 performs the intermittent reception. More specifically, the path detection control portion 129 acquires the information on the estimated phase difference from the synchronization detecting portion 127 and estimates the velocity of travel of the mobile station 10 from the phase difference. The path detection control portion 129 acquires the information on the reception levels of the demodulated signals from the RAKE synthesizing portion 127A and estimates the direction of travel of the mobile station 10 with respect to the wireless base station 20 on the basis of the change in reception level.

Then, the path detection control portion 129 estimates the change in path timing during the sleep period on the basis of the velocity of travel and the direction of travel of the mobile station 10 before the sleep and causes the path detecting portion 125 to correct the window position. Thus, after a lapse of the sleep period, the path detection is performed on the basis of the corrected window position. The details of the path detection control portion 129 will be described later.

The transmitting portion 13 encodes and modulates the data to be transmitted to the wireless base station 20. The first embodiment applies the CDMA system as the communication method, and the transmitting portion 13 code-spreads and modulates the transmit signal. The transmitting portion 13 includes an encoding portion 131, a spreading portion 132, a D/A (Digital-to-Analog) converting portion 133, an RF portion 134 and a power amplifier 135.

The encoding portion 131 acquires the data to be transmitted to the wireless base station 20 from the module (not indicated) that processes the data and then encodes the data. The encoding method for use in system may be agreed in advance between the mobile station 10 and the wireless base station 20, for example. Then, the encoding portion 131 outputs the acquired encoded data to the spreading portion 132.

The spreading portion 132 performs spreading processing on the acquired encoded data from the encoding portion 131 by using the spreading code. The spreading code number for use in system may be agreed in advance between the mobile station 10 and the wireless base station 20, for example. Then, the spreading portion 132 outputs the digital baseband signal acquired by the spreading processing to the D/A converting portion 133.

The D/A converting portion 133 converts the digital baseband signal acquired from the spreading portion 132 to an analog baseband signal. Then, the D/A converting portion 133 outputs the acquired baseband signal to the RF portion 134.

The RF portion 134 uses a frequency converter and/or BPF to convert the baseband signal in a low frequency band, which is acquired from the D/A converting portion 133, to the signal in a high frequency band, which corresponds to the wireless signal. Then, the RF portion 134 outputs the acquired transmit signal to the power amplifier 135.

The power amplifier 135 amplifies the transmit signal acquired from the RF portion 134. Then, the power amplifier 135 outputs the amplified transmit signal to the antenna duplexer 11. Thus, the transmit signal is output by wireless from the antenna.

The power supply control portion 14 controls the power supply to the receiving portion 12 and the transmitting portion 13. More specifically, when the mobile station 10 comes into a standby state that no communication is performed, the power supply to the receiving portion 12 and transmitting portion 13 is stopped. The power supply control portion 14 further sets a timer in the timer portion 15 for a period T (such as T=2.56 seconds). After that, the power supply control portion 14 supplies power to the receiving portion 12 at the periods T on the basis of the notifications from the timer portion 15 and wakes up the receiving portion 12.

Here, when the receiving portion 12 is woken up, the power supply control portion 14 acquires the receive signal from the receiving portion 12 and determines whether any downlink communication to its own station (which is communication from the wireless base station to the mobile station) is occurring or not. The occurrence of the downlink communication to its own station may be determined on the basis of the PICH (Paging Indicator CHannel) signal or PCH (Paging CHannel) signal included in the receive signal, for example.

In other words, the power supply control portion 14 acquires the PICH signal included in the receive signal after the wake-up of the receiving portion 12. The PICH signal includes the group ID of the mobile station group where the downlink communication has occurred. The power supply control portion 14 compares between the group ID of the preset mobile stations 10 and the group ID represented by the PICH signal and determines whether the group to which the mobile stations 10 belong are the communication target or not. If the group IDs are matched, the power supply control portion 14 further acquires the PCH signal included in the receive signal. The PCH signal includes the user ID of the mobile station where the downlink communication has occurred. The power supply control portion 14 compares the user ID of the preset mobile station 10 and the user ID represented by the PCH signal and determines whether its own station is the communication target or not.

If the downlink communication to its own station is occurring, the power supply control portion 14 cancels the timer at the periods T in the timer portion 15 and stops causing the receiving portion 12 to sleep intermittently. The transmitting portion 13 is woken up if the uplink communication (which is communication from the mobile station to the wireless base station) occurs in the mobile station 10. On the other hand, if no downlink communication to its own station occurs, the power supply control portion 14 stops the power supply to the receiving portion 12 and causes the receiving portion 12 to sleep. Notably, the power supply control portion 14 may implement the sleep and wake-up by controlling the clocks to be supplied to the receiving portion 12 and the transmitting portion 13.

The timer portion 15 in response to the instruction to set the timer from the power supply control portion 14 starts counting time and performs the notification to the power supply control portion 14 at the periods T (such as T=2.56 seconds). The count is continuously performed until the instruction to cancel the setting is received from the power supply control portion 14. Thus, during the standby period, the receiving portion 12 is woken up at the periods T.

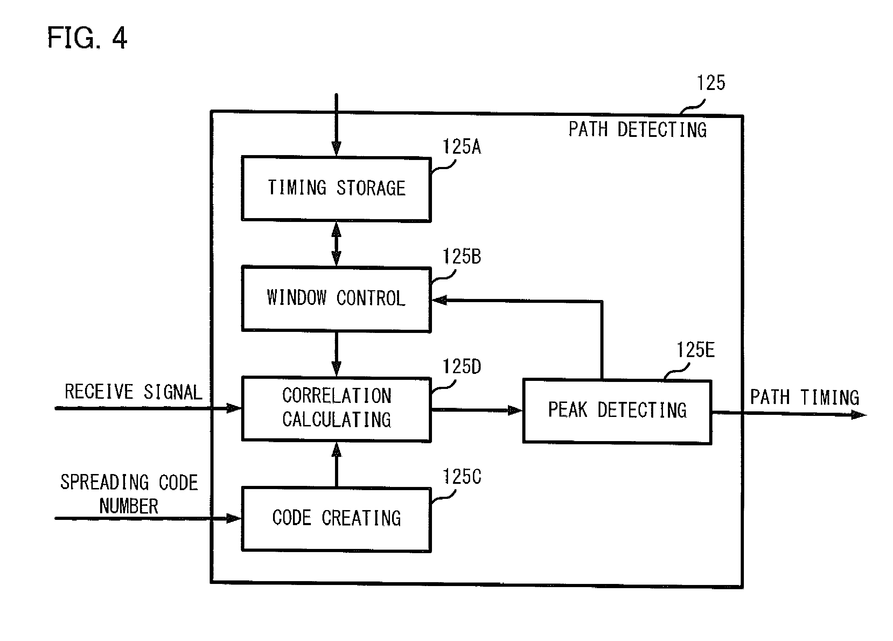

Fig. 4 is a block diagram illustrating the path detecting portion of the first embodiment. The path detecting portion 125 includes a timing storage portion 125A, a window control portion 125B, a code creating portion 125C, a correlation calculating portion 125D and a peak detecting portion 125E.

The timing storage portion 125A stores positional information of the window to be used for the path detection. The positional information in the timing storage portion 125A may be, for example, information indicating the time at the center of the current window. The time width of the window may be a fixed value, for example. The positional information is updated as required by the window control portion 125B. The timing storage portion 125A temporarily stores the correction value output by the path detection control portion 129.

The window control portion 125B controls the window to be used for the path detection. More specifically, the window control portion 125B acquires the positional information from the timing storage portion 125A and designates the window section described by the positional information to the correlation calculating portion 125D. The window control portion 125B further acquires the peak position (which is the path timing with the highest correlation) detected by the path detection from the peak detecting portion 125E. Then, the window position is corrected such that the peak position can be at the center of the window for the next path detection, and the positional information in the timing storage portion 125A is updated.

When the path detection control portion 129 stores the correction value to the timing storage portion 125A, the window control portion 125B updates the positional information stored in the timing storage portion 125A on the basis of the correction value. Notably, the update of the positional information with the correction value may be performed before the receiving portion 12 sleeps, or after the receiving portion 12 wakes up and before the path detection starts (or immediately after the wake-up).

The code creating portion 125C creates the spreading code corresponding to the spreading code number notified from the cell detecting portion 124. Then, the code creating portion 125C supplies the created spreading code to the correlation calculating portion 125D. Notably, the code creating portion 125C may create plural spreading codes for different timings in parallel.

The correlation calculating portion 125D acquires the correlation value between the receive signal acquired from the AGC portion 123 and the spreading code supplied from the code creating portion 125C. For example, the receive signal and the spreading code may be compared on a bit-by-bit basis, and whether the bits are matched or not may be determined. Then, the count of the matched bits in a predetermined section may be calculated as the correlation value. The circuit that implements the correlation calculation may be a matched filter, for example. The section on which the correlation calculation is to be performed is designated by the window control portion 125B. Then, the correlation calculating portion 125D sequentially outputs the correlation value to the peak detecting portion 125E.

The peak detecting portion 125E acquires the correlation value output by the correlation calculating portion 125D and detects, as the path timing, the timing (peak position) with the highest correlation value within the section indicated by the window. The peak detecting portion 125E also detects, as the path timing, the timing at a position excluding the peak position with a higher correlation value than a predetermined value. Then, the peak detecting portion 125E outputs the information (path profile) relating to the detected path timing, such as the number of paths and the amounts of delay of the paths, to the despreading portion 126. The peak detecting portion 125E notifies the window control portion 125B of the detected peak position.

If no timings which have a higher correlation value than the predetermined value are detected within the section indicated by the window, the path detection fails. If the path detection fails, the cell detecting portion 124 may retry the cell search, for example. After that, in response to the result of the cell search, the path detecting portion 125 may retry the path detection, for example.

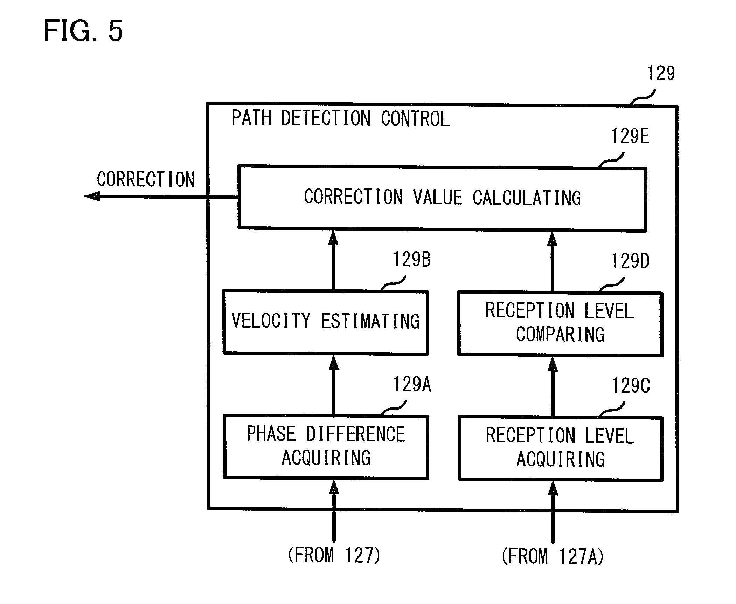

Fig. 5 is a block diagram illustrating the path detection control portion of the first embodiment. The path detection control portion 129 includes a phase difference acquiring portion 129A, a velocity estimating portion 129B, a reception level acquiring portion 129C, a reception level comparing portion 129D and a correction value calculating portion 129E.

The phase difference acquiring portion 129A acquires from the synchronization detecting portion 127 the information on the phase difference estimated in the channel estimation and channel compensation. The phase difference to be acquired may be the phase difference from the original timing of the pilot signal received before the sleep (such as immediately before the sleep). Then, the phase difference acquiring portion 129A notifies the velocity estimating portion 129B of the phase difference of the receive signal before the sleep.

The velocity estimating portion 129B calculates the Doppler frequency deviation of the receive signal on the basis of the phase difference notified from the phase difference acquiring portion 129A. The Doppler frequency deviation is the difference between the original carrier frequency used for the wireless transmission by the wireless base station 20 and the frequency of the receive signal and is the frequency difference caused by the Doppler effect. The Doppler frequency deviation may be calculated in parts per million (ppm) based on the original carrier frequency.

Then, the velocity estimating portion 129B estimates the velocity of travel of the mobile station 10 from the calculated Doppler frequency deviation. The velocity of travel [m/s (or meter per second)] may be calculated by the following expression:

$$\text{Velocity of Travel [m/s]} = \text{Velocity of Light [m/s]} \times \text{Doppler Frequency Deviation [ppm]}$$

Thus, the velocity of travel of the mobile station 10 before the sleep can be estimated. After that, the velocity estimating portion 129B notifies the correction value calculating portion 129E of the estimated velocity of travel.

The reception level acquiring portion 129C acquires the information on the reception level of the demodulated signal from the RAKE synthesizing portion 127A. The reception level to be acquired may be the reception level of the demodulated signal after the RAKE synthesis or the reception level of any one demodulated signal (such as the demodulated signal of the path at the earliest time) before the RAKE synthesis. The reception level acquiring portion 129C may use the value (such as the weighted average efficiency) calculated from the reception levels of plural demodulated signals before the RAKE synthesis. Then, the reception level acquiring portion 129C notifies the reception level comparing portion 129D of the reception level before the sleep.

The reception level comparing portion 129d stores the information on the reception level notified from the reception level acquiring portion 129C in a predetermined memory (not indicated). In the memory, the information on the reception levels before a predetermined time is stored. For example, the information on the acquired reception levels before the last sleep may be stored. The reception level comparing portion 129D determines the tendency of increase or decrease in reception levels on the basis of the latest reception level and the past reception levels. For example, the two of the latest reception level and the reception levels before the last sleep are compared for the determination. However, in order to avoid the influence of a sudden decrease in reception level, for example, the tendency of increase or decrease may be determined on the basis of the three or more reception levels.

Then, the reception level comparing portion 129D notifies the correction value calculating portion 129E of the increase or decrease in reception level. Notably, it is determined that the increase in reception level means that the mobile station 10 is approaching the wireless base station 20 while the decrease in reception level means that the mobile station 10 is traveling away from the wireless base station 20.

The correction value calculating portion 129E calculates the correction value of the window position on the basis of the velocity of travel notified from the velocity estimating portion 129B and the increase or decrease in reception level notified from the reception level comparing portion 129D. This intends to estimate the change in path timing during the sleep period and causes the window to follow the change. The correction value calculating portion 129E acquires from the velocity of travel, the amount of correction of the window position (or the amount of shift of the window) on the time axis. From the tendency of increase or decrease in reception level, the positive or negative correction (which is the direction of shift of the window) is acquired.

The amount of correction [s (or seconds)] for the window position may be calculated by, for example, the following expression:

$$\text{Amount of Correction D [s]} = \text{Amount of Correction D1 [s]} + \text{Amount of Correction D2 [s]}$$

$$\text{Amount of Correction D1 [s]} = a \times \text{Velocity of Travel [m/s]} \times \text{Intermittent Period T [s]} \div \text{Velocity of Light [m/s]}$$

$$\text{Amount of Correction D2 [s]} = \text{Doppler Frequency Deviation [ppm]} \times \text{Intermittent Period T [s]}$$

where a is a predetermined weighting factor, and a may be equal to 1, for example.

The amount of correction D1 is the change in path timing due to the change in distance between the mobile station 10 and the wireless base station 20, that is, the amount of correction for compensating the change in propagation delay.

The amount of correction D2 is the amount of correction for compensating the change in path timing due to the Doppler effect. The sum of the amount of correction D1 and the amount of correction D2 is the entire amount of correction D.

If the reception level tends to increase, the correction value calculating portion 129E determines to perform positive correction. In other words, if it is determined that the mobile station 10 is approaching the wireless base station 20, the correction value calculating portion 129E determines to shift the window in the direction for earlier timing. On the other hand, the reception level tends to decrease, the correction value calculating portion 129E determines to perform negative correction. In other words, if it is determined that the mobile station 10 is traveling away from the wireless base station 20, the correction value calculating portion 129E determines to shift the window in the direction for later timing.

After that, the correction value calculating portion 129E outputs the correction value identified by the amount of correction and the sign (negative or positive) to the path detecting portion 125 before the sleep. As a result, after a lapse of the sleep period, the path detection is performed on the basis of the window shifted in accordance with the state of travel of the mobile station 10 before the sleep.

Notably, the mobile station 10 may estimate the velocity of travel by a method which is different from the one described above. For example, the mobile station 10 may acquire the average of the reception levels in a predetermined period for one path among the detected paths. Then, the reception levels may be traced in a time series manner, and the number of times of the changes in reception level across the average (which will be called number of times of crossing) may be acquired. The velocity of travel may be calculated by a predetermined computational expression from the number of times of crossing and the carrier frequency. For the details of the estimation method, refer to "Ido Tsushin no Kiso (Basic of Mobile Communication)", Okumura and Shinji, Institute of Electronics, Information and Communication Engineers, for example.

Next, the details of the intermittent reception processing to be performed by the mobile station 10 as described above will be described.

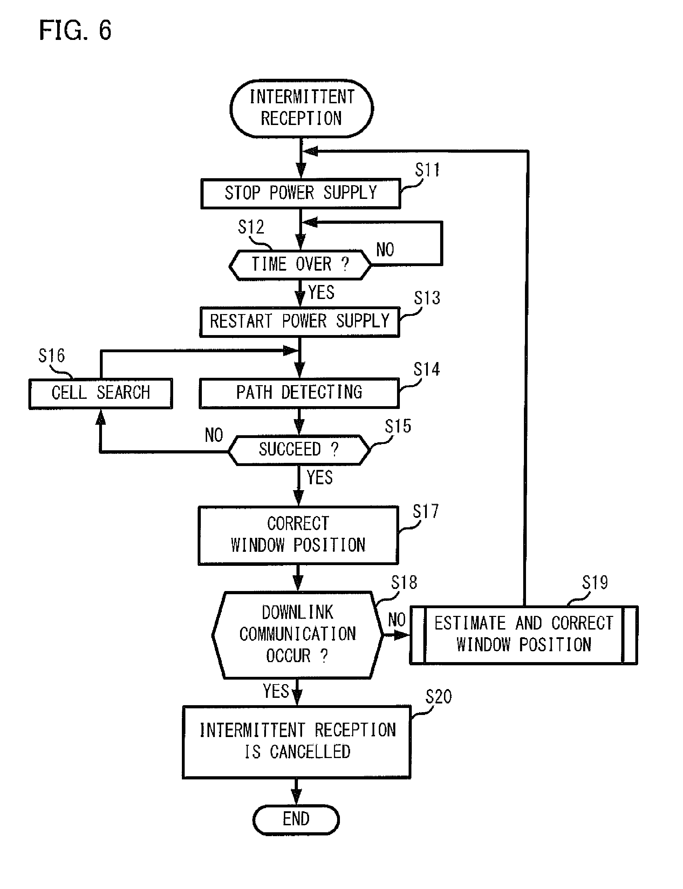

Fig. 6 is a flowchart illustrating the intermittent-reception control of the first embodiment. The processing indicated in Fig. 6 will be described below with reference to the step numbers. Notably, it is assumed that the cell search has completed before the processing starts and that the mobile station 10 is continuously accessible to the cell formed by the wireless base station 20.

Step S 11: The power supply control portion 14 stops the power supply to the receiving portion 12 and causes the receiving portion 12 to sleep. At that time, the path detection by the path detecting portion 125 stops.

Step S12: The timer portion 15 determines whether a period of period of time T (such as 2.56 seconds) has passed from the last wake-up or not. If the period of period of time T has passed, the processing moves to step S13. If the period of time T has not passed, the processing in step S12 is repeated until the period of time T passes.

Step S13: The timer portion 15 notifies the power supply control portion 14 of that the counting of the period of time T has completed. The power supply control portion 14 in response to the notification from the timer portion 15 restarts the power supply to the receiving portion 12 and wakes up the receiving portion 12.

Step S14: The path detecting portion 125 performs the path detection on the receive signal after the wake-up. In other words, the window control portion 125B defines the detection section on the basis of the positional information of the window, which is stored in the timing storage portion 125A. The correlation calculating portion 125D performs the correlation calculation within the section of the window defined by the window control portion 125B. The peak detecting portion 125E detects the path timing from the calculation result by the correlation calculating portion 125D.

Step S15: The path detecting portion 125 determines whether the path detection in step S14 has succeeded or not, that is, whether at least one path has been detected within the section indicated by the window. If the path detection succeeds, the processing moves to step S17. If the path detection has fails, the processing moves to step S16.

Step S16: The cell detecting portion 124 performs the cell search on the receive signal after the wake-up. In other words, the cell detecting portion 124 performs dispreading the receive signal by using the candidates for the spreading code and determines an accessible cell and the spreading code number used in the cell. Then, the cell detecting portion 124 notifies the path detecting portion 125 of the spreading code number, and the processing moves to step S14.

Step S17: The path detecting portion 125 corrects the position of the window on the basis of the result of the path detection in step S14. In other words, the window control portion 125B shifts the window such that the peak position detected by the peak detecting portion 125E can be at the center of the window and updates the positional information stored in the timing storage portion 125A.

Step S18: The power supply control portion 14 determines whether any downlink communication to its own station is occurring or not on the basis of the receive signal after the wake-up. For example, the power supply control portion 14 determines it with reference to the PICH signal and PCH signal included in the receive signal. If some downlink communication to its own station is occurring, the processing moves to step S20. If no downlink communication to its own station occurs, the processing moves to step S19.

Step S19: The path detection control portion 129 acquires the phase difference occurring in the receive signals from the synchronization detecting portion 127 and acquires the reception levels of the receive signals from the RAKE synthesizing portion 127A. Then, the path detection control portion 129 calculates the correction value for the window on the basis of the acquired phase difference and reception levels and outputs it to the path detecting portion 125. The path detecting portion 125 estimates and corrects the window position on the basis of the correction value acquired from the path detection control portion 129. After that, the processing moves to step S11.

Step S20: The power supply control portion 14 stops the time counting by the timer portion 15. The power supply control portion 14 keeps the power supply to the receiving portion 12. Thus the intermittent reception mode is cancelled.

In this way, when the mobile station 10 comes into the intermittent reception mode by shifting to the standby state, for example, the power supply control portion 14 causes the receiving portion 12 to sleep. After that, the power supply control portion 14 temporarily wakes up the receiving portion 12 at predetermined cycles until the intermittent reception mode is cancelled. The receiving portion 12 upon woken up performs the path detection on the basis of the window position defined before the sleep. Then, the receiving portion 12 extracts the signal indicating the presence of the downlink communication to its own station from the receive signal in accordance with the detected path timing. If no downlink communication to its own station exists, the receiving portion 12 estimates the change in path timing during the sleep period, corrects the window position and then sleeps. Notably, the flowchart does not illustrate the control over the transmitting portion 13.

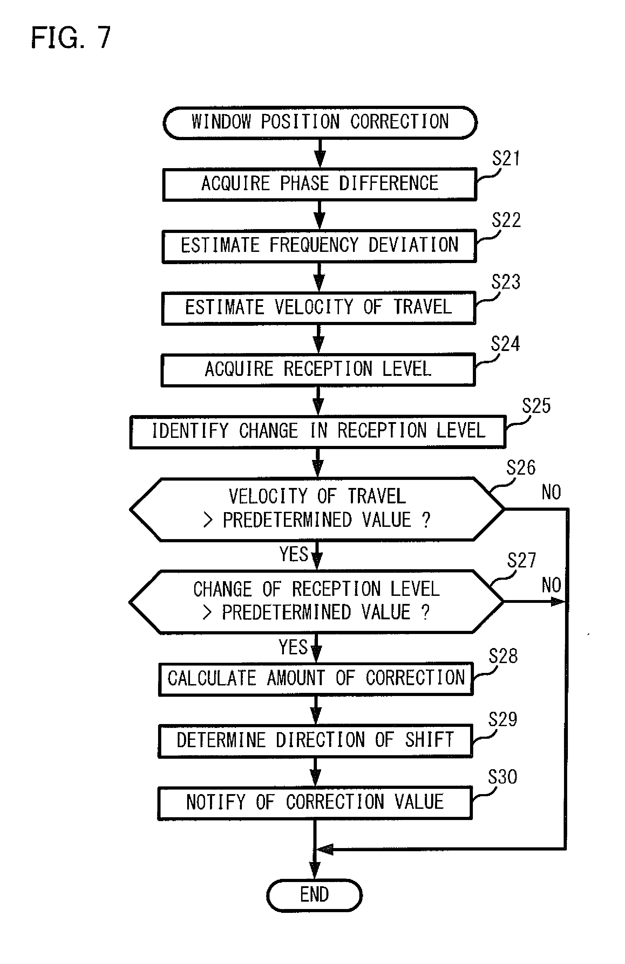

Fig. 7 is a flowchart illustrating the window position correction of the first embodiment. The flowchart illustrates the processing in step S19 in more detail. The processing indicated in Fig. 7 will be described below with reference to the step numbers.

Step S21: The phase difference acquiring portion 129A acquires the information indicating the phase difference occurring in the pilot signal included in the receive signal from the synchronization detecting portion 127.

Step S22: The velocity estimating portion 129B estimates the Doppler frequency deviation from the information on the phase difference acquired by the phase difference acquiring portion 129A in step S21.

Step S23: The velocity estimating portion 129B estimates the current velocity of travel of the mobile station 10 from the Doppler frequency deviation estimated in step S22. Notably, as described above, the velocity estimating portion 129B can estimate the velocity of travel from the information excluding the phase difference.

Step S24: The reception level acquiring portion 129C acquires the information indicating the reception level of the demodulated receive signal from the RAKE synthesizing portion 127A. Notably, the reception level may be one after the RAKE synthesis or before the RAKE synthesis.

Step S25: The reception level comparing portion 129D compares the information on the reception level acquired by the reception level acquiring portion 129C in step S24 and the information on the reception level acquired in the past and identifies the change in reception level. For example, the reception level comparing portion 129D may acquire the amount of change by subtracting the value of the reception level upon last wake-up from the value of the reception level this time.

Step S26: The correction value calculating portion 129E determines whether the velocity of travel estimated by the velocity estimating portion 129B in step S23 is larger than a predetermined value or not. If the velocity of travel is larger than the predetermined value, the processing moves to step S27. If the velocity of travel is equal to or smaller than the predetermined value, it is determined that the correction on the window position is not necessary, and the amount of correction is regarded as zero. Then, the processing ends.

Step S27: The correction value calculating portion 129E determines whether the amount of change in reception level identified by the reception level comparing portion 129D in step S25 is larger than a predetermined value or not. If the amount of change in reception level is larger than the predetermined value, the processing moves to step S28. If the amount of change in reception level is equal to or smaller than the predetermined value, it is determined that the correction on the window position is not necessary. Then, the amount of correction is regarded as zero, and the processing ends.

Step S28: The correction value calculating portion 129E calculates the amount of correction (the amount of shift of the window) of the window position from the velocity of travel estimated by the velocity estimating portion 129B in step S23. The amount of correction on the window position may include, for example, the amount of correction corresponding to the change in propagation delay and the amount of correction corresponding to the Doppler effect.

Step S29: The correction value calculating portion 129E determines the positive or negative correction value (which is the direction of shift of the window) from the tendency of increase or decrease in reception level identified by the reception level comparing portion 129D in step S25. In other words, if the reception level increases, the correction value calculating portion 129E determines to shift the window in the direction for earlier timing. If the reception level decreases, the correction value calculating portion 129E determines to shift the window in the direction for later timing.

Step S30: The correction value calculating portion 129E outputs the correction value identified by the amount of correction calculated in step S28 and the direction of correction determined in step S29 to the path detecting portion 125. Thus, the window position is corrected from the position when the path detection is performed before the sleep, and the window position after the correction is handled as the position for the path detection upon next wake-up.

In this way, the path detection control portion 129 grasps the state of travel of the mobile station 10 before the receiving portion 12 sleeps (or immediately before the sleep, for example). More specifically, on the basis of the receive signal before the sleep, the velocity of travel of the mobile station 10 and the direction of travel with respect to the wireless base station 20 are estimated. Then, the path detection control portion 129 acquires the amount of shift of the window from the velocity of travel and determines the direction of shift of the window from the direction of travel.

At that time, if the velocity of travel is small enough or if the amount of change in reception level is small enough, it is estimated that the change in path timing during the sleep period is small. Then, the window position is not corrected. The predetermined value here may be predefined by a manager in accordance with the communication environment in a location where the wireless communication system is deployed.

The processing relating to the velocity of travel in steps S21 to S23, S26 and S28 and the processing relating to the direction of travel in steps S24, S25, S27 and S29 may be performed in parallel. In this case, if it is determined that the velocity of travel is equal to or smaller than a predetermined value or if the amount of change in reception level is equal to or smaller than a predetermined value, the subsequent processing may be aborted, and the correction value may be determined as zero.

While, in the flowcharts in Fig. 6 and Fig. 7, the window position is estimated and is corrected every time the receiving portion 12 wakes up, it may be performed once per several wake-ups. For example, when the calculated amounts of correction are small enough serially the number of times equal to or higher than a predetermined number of times, the subsequent estimation and correction processing may be omitted properly.

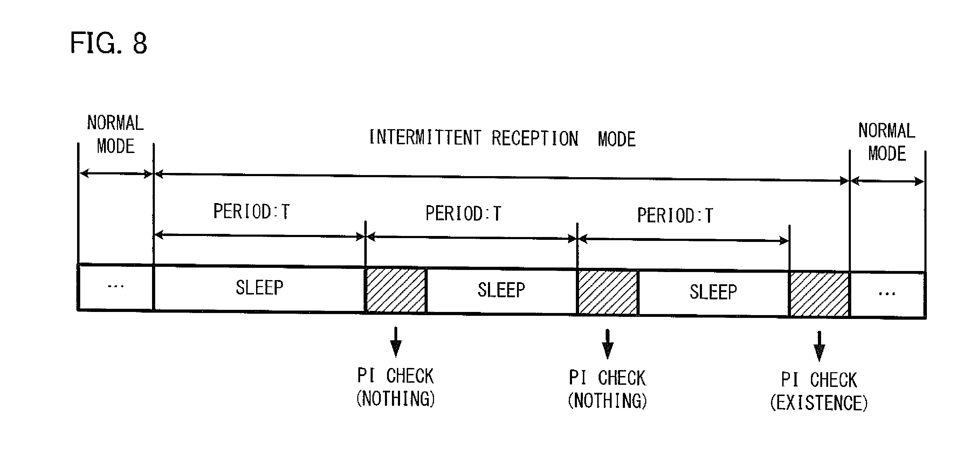

Fig. 8 is a diagram illustrating the timing of the intermittent reception. While downlink communication is being performed, the mobile station 10 operates in a normal mode, and the receiving portion 12 keeps operating. After that, when the downlink communication ends and the mobile station 10 comes into the standby state, the mode is shifted to the intermittent reception mode, and the receiving portion 12 sleeps. During the sleep period, the path detection in the receiving portion 12 stops.

Then, after a lapse of the period of time T after the sleep, the receiving portion 12 wakes up and the path detection starts. If the path detection succeeds, the PICH signal is extracted. If it is determined that no downlink communication to the mobile station 10 is occurring on the basis of the PICH signal (or both of the PICH signal and the PCH signal extracted after that), the receiving portion 12 sleeps again.

Then, after a lapse of the period of time T from the last wake-up, the receiving portion 12 wakes up, and, as described above, the path detection and the extraction of the PICH signal are performed. Here, if it is determined that the downlink signal to the mobile station 10 is occurring on the basis of the PICH signal and the PCH signal, the mobile station 10 returns from the intermittent reception mode to the normal mode. Thus, the downlink communication is implemented.

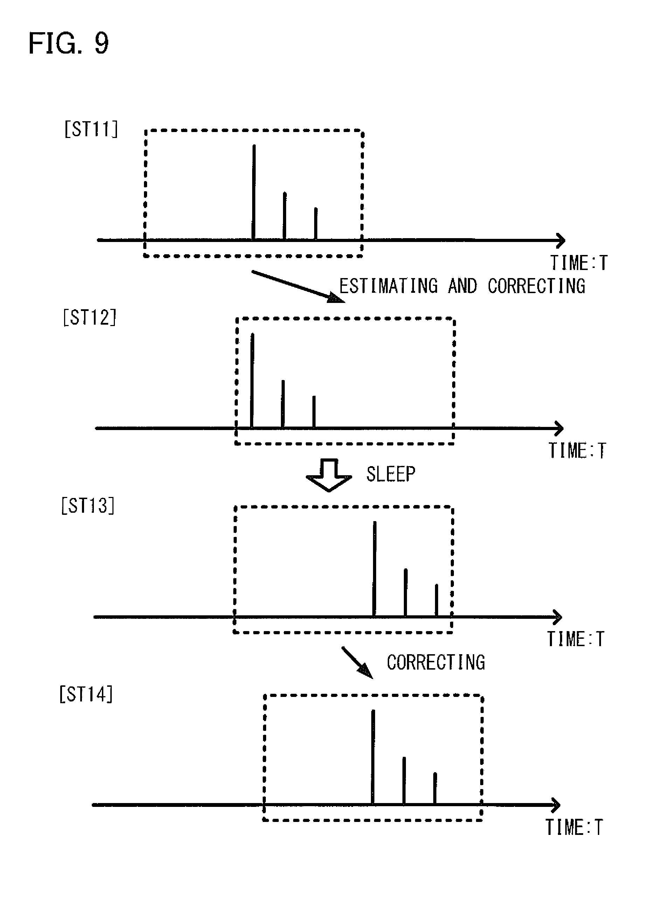

Fig. 9 is a diagram illustrating a first correction example of the window position. Immediately after the receiving portion 12 performs the path detection, the window has the setting that the center is matched with the peak position (where the correlation value is the highest path timing) (Step ST11). Next, if the receiving portion 12 sleeps, the correction value is calculated on the basis of the state of travel of the mobile station 10 before the sleep, and the window position is estimated and corrected (step ST12). After that, the receiving portion 12 sleeps. When the receiving portion 12 wakes up after a lapse of the sleep period, the path detection is performed with the window position after the estimation and correction (step ST13). Then, the window position is corrected such that the center of the window can be matched with the peak position (step ST14).

Here, in the example in Fig. 9, the path timing changes largely in the direction for later timing during the sleep period. This may occur when the mobile station 10 travels fast in the direction away from the wireless base station 20. If, under this circumstance and after a lapse of the sleep period, the path detection is performed by keeping the window position for the path detection before the sleep, the path timing is off the range of the window, resulting in the failure of the path detection. If the path detection fails, the mobile station 10 may retry the cell search, which causes the processing delay.

On the other hand, by detecting before the sleep that the mobile station 10 is traveling fast in the direction away from the wireless base station 20, the window position may be corrected in advance in the direction for later timing. Thus, the path detection restarted after a lapse of the sleep period can also detect the path timing within the range of the window.

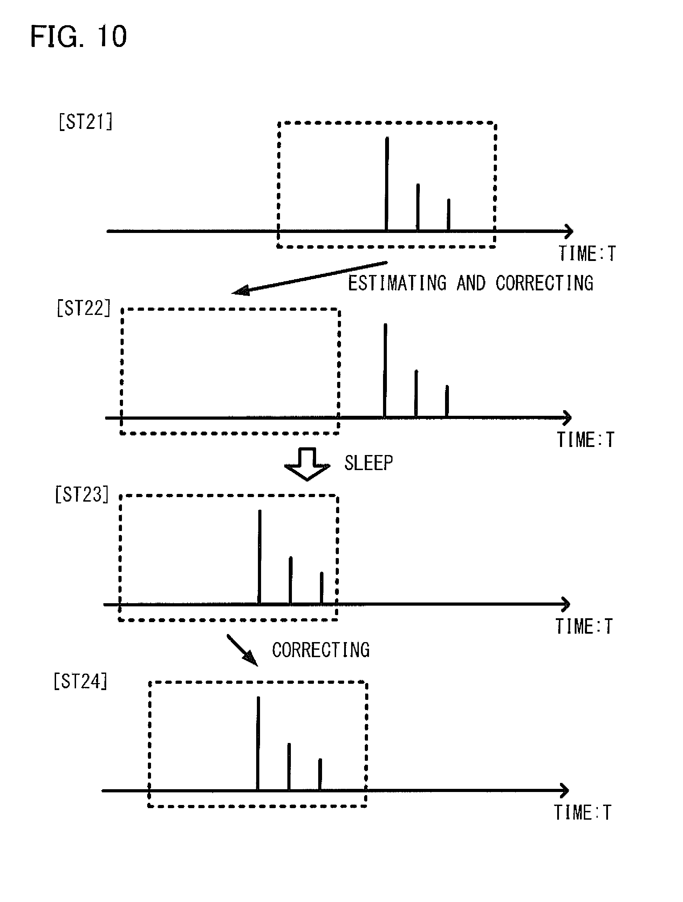

Fig. 10 is a diagram illustrating the second correction example of the window position. Also in the example in Fig. 10, immediately after the path detection is performed, the window has the setting that the center is matched with the peak position (step ST21) like the example in Fig. 9. Next, the correction value is calculated on the basis of the state of travel of the mobile station 10 before the sleep, and the window position is estimated and corrected (step ST22). When the receiving portion 12 wakes up after a lapse of the sleep period, the path detection is performed with the window position after the estimation and correction (step ST23). Then, the window position is corrected such that the center of the window can be matched with the peak position (step ST24).

Here, in the example in Fig. 10, the path timing changes largely in the direction for earlier timing during the sleep period. This may occur when the mobile station 10 travels fast in the direction approaching the wireless base station 20. If, also under this circumstance and after a lapse of the sleep period, the path detection is performed by keeping the window position for the path detection before the sleep, the path timing is off the range of the window, resulting in the failure of the path detection.

On the other hand, by detecting before the sleep that the mobile station 10 is traveling fast in the direction approaching the wireless base station 20, the window position may be corrected in advance in the direction for earlier timing. Thus, the path detection restarted after a lapse of the sleep period can also detect the path timing within the range of the window.

In Fig. 9 and Fig. 10, the window position is corrected before the sleep of the receiving portion 12. On the other hand, a method may be considered that pre-stores the correction value calculated before the sleep in a storage medium (memory, for example), whereby the window position is corrected after the wake-up. Alternatively, the information indicating the state of travel before the sleep may be pre-stored in a storage medium (memory, for example), and the correction value may be calculated after the wake-up.

By using the mobile station 10, the window position can be corrected properly in advance for the restart of the path detection after a lapse of the sleep period. In other words, the change in path timing during the sleep period may be estimated from the velocity of travel and/or the direction of travel of the mobile station 10 before the sleep, and the window can be shifted to follow the change. Thus, even when there is a possibility that the path timing changes largely during the sleep period like the case where the mobile station 10 is traveling fast, the probability of the failure of the path detection after a lapse of the sleep period can be reduced.

Notably, the method that shifts the window in advance is effective in that the power consumption and the size of the circuit can be suppressed, compared with the method that increases the window width to allow the change in path timing and the method that reduces the sleep period to prevent a large change in path timing. However, the method that shifts the window and other methods may be combined to reduce the probability of the failure in path detection more.

The mobile station 10 according to the first embodiment can also estimate the velocity of travel by using the information on the phase difference acquired in channel estimation or channel compensation. Alternatively, the information on the reception level may be used to estimate the direction of travel. In this way, the mobile station 10 can make use of the circuit for the use in demodulating and decoding a receive signal to identify the state of travel, which can suppress the increase in size of circuit with the addition of the estimation-and-correction function.

Second Embodiment

Next, a second embodiment will be described. The differences from the first embodiment will be mainly described, and the descriptions on the similar matters will be omitted.

The wireless communication system according to the second embodiment uses a GPS to acquire the velocity of travel and the direction of travel of a mobile station. The wireless communication system according to the second embodiment includes a mobile station and a wireless base station, like the wireless communication system according to first embodiment indicated in Fig. 2. However, the functions included in the mobile station are different from the mobile station 10 according to the first embodiment.

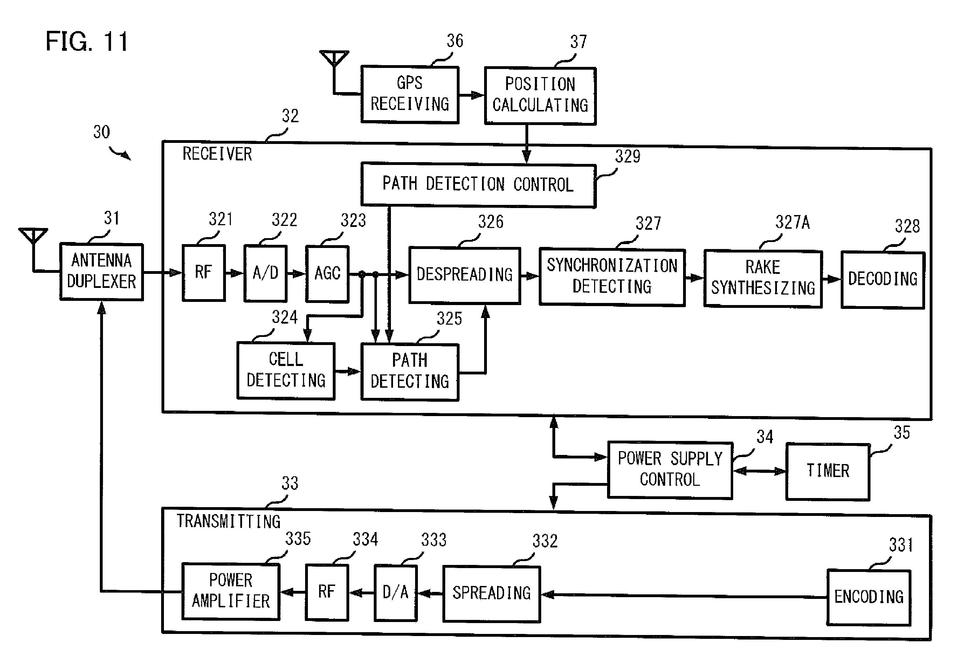

Fig. 11 is a block diagram illustrating the mobile station of the second embodiment. A mobile station 30 according to the second embodiment includes an antenna duplexer 31, a receiving portion 32, a transmitting portion 33, a power supply control portion 34, a timer portion 35, a GPS receiving portion 36 and a position calculating portion 37.

The receiving portion 32 includes an RF portion 321, an A/D converting portion 322, an AGC portion 323, a cell detecting portion 324, a path detecting portion 325, a despreading portion 326, a synchronization detecting portion 327, a RAKE synthesizing portion 327A, a decoding portion 328 and a path detection control portion 329.

The transmitting portion 33 includes an encoding portion 331, a spreading portion 332, a D/A converting portion 333, an RF portion 334 and a power amplifier 335. The functions of the modules are similar to the modules under the same names according to the first embodiment indicated in Fig. 3 except for the path detection control portion 329, the GPS receiving portion 36 and the position calculating portion 37.

The path detection control portion 329 controls the position of the window for the path detecting portion 325 when the mobile station 30 performs intermittent reception. More specifically, the path detection control portion 329 acquires the current position of the mobile station 30 from the position calculating portion 37 and calculates the velocity of travel of the mobile station 30 from the change in current position. The path detection control portion 329 further calculates the current position of the mobile station 30 and the distance with respect to the position of the wireless base station 20 and acquires the direction of travel of the mobile station 30 with respect to the wireless base station 20 from the change in distance.

Then, the path detection control portion 329 estimates the change in path timing during the sleep period on the basis of the velocity of travel and way of traveling of the mobile station 30 before the sleep and causes the path detecting portion 325 to correct the window position. Notably, the information on the position of the wireless base station 20 may be predefined in the mobile station 30. Alternatively, in a case where the wireless base station 20 informs the position of its own station as control information, it may be extracted from the control information. The details of the path detection control portion 329 will be described later.

The GPS receiving portion 36 acquires GPS signals through the GPS antenna from plural GPS satellites. Then, the GPS receiving portion 36 acquires the distance between the GPS satellites and the mobile station 30 on the basis of the GPS signals. After that, the GPS receiving portion 36 outputs the acquired information on the distance to the position calculating portion 37.

The position calculating portion 37 calculates the current position of the mobile station 30 on the basis of the information on the distances from the plural GPS satellites acquired from the GPS receiving portion 36. The current position may be expressed as coordinate information on a global coordinate system, for example. Then, the position calculating portion 37 notifies the path detection control portion 329 of the current position of the mobile station 30. Notably, the position calculating portion 37 may use a DGPS (Differential Global Positioning System) which is a method that increases the measurement accuracy by correcting the measurement result based on a GPS signal.

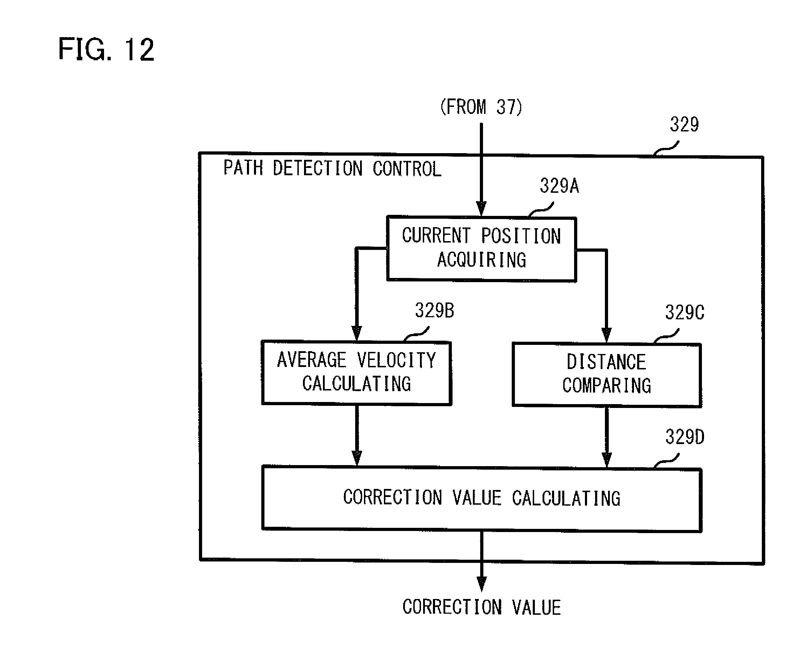

Fig. 12 is a block diagram illustrating the path detection control portion of the second embodiment. The path detection control portion 329 includes a current position acquiring portion 329A, an average velocity calculating portion 3298, a distance comparing portion 329C and a correction value calculating portion 329D.

The current position acquiring portion 329A acquires the information on the current position, which is measured by the GPS, of the mobile station 30 before the sleep from the position calculating portion 37. Then, the current position acquiring portion 329A notifies the average velocity calculating portion 329B and the distance comparing portion 329C of the current position before the sleep.

The average velocity calculating portion 329B stores the information on the current position, which is notified from the current position acquiring portion 329A, of the mobile station 30 in association with the current time in a predetermined storage medium (not indicated). The storage medium (memory, for example) pre-stores the positional information before a predetermined time. The average velocity calculating portion 329B calculates the average velocity of travel of the mobile station 30 on the basis of the latest positional information and the measured time thereof, and the past positional information and the measured time thereof. For example, the difference between the current position and the position before the last sleep may be divided by the difference between both of the measured times so as to acquire the average velocity of travel. Then, the average velocity calculating portion 329B notifies the correction value calculating portion 329D of the average velocity of travel.

The distance comparing portion 329C calculates the distance between the mobile station 30 and the wireless base station 20 from the current position of the mobile station 30 and the positions of the wireless base station 20, which are notified from the current position acquiring portion 329A. The calculated information on the distance is stored in a predetermined storage medium (not indicated). The storage medium (memory, for example) pre-stores the distance information before a predetermined time.

Then, the distance comparing portion 329C determines the tendency of increase or decrease in distance, that is, whether the mobile station 30 is approaching the wireless base station 20 or not on the basis of the latest distance and the past distance. For example, the two of the latest distance and the distance before the last sleep may be compared for the determination. Alternatively, on the basis of information on three or more distances, the tendency of increase or decrease may be determined. After that, the distance comparing portion 329C notifies the correction value calculating portion 329D of the increase or decrease in distance.

The correction value calculating portion 329D calculates the correction value for the window position on the basis of the average velocity of travel notified from the average velocity calculating portion 329B and the increase or decrease in distance notified from the distance comparing portion 329C. Then, the correction value calculating portion 329D outputs the calculated correction value to the path detecting portion 325 before the sleep.

At that time, the correction value calculating portion 329D acquires the amount of correction (the amount of shift of the window) for the window position on a time axis from the average velocity of travel. The amount of correction may be calculated by the similar method to the method described according to the first embodiment. The correction value calculating portion 329D acquires the positive or negative correction (the direction of shift of the window) from the tendency of increase or decrease in distance. More specifically, when the distance tends to decrease, it is determined to correct in the positive direction (which is the direction for earlier timing). When the distance tends to increase, it is determined to correct in the negative direction (which is the direction for later timing).

Next, the details of the aforesaid intermittent reception processing performed in the mobile station 30 will be described. However, the entire flow of the intermittent reception is similar to that of the processing of the first embodiment indicated in Fig. 6.

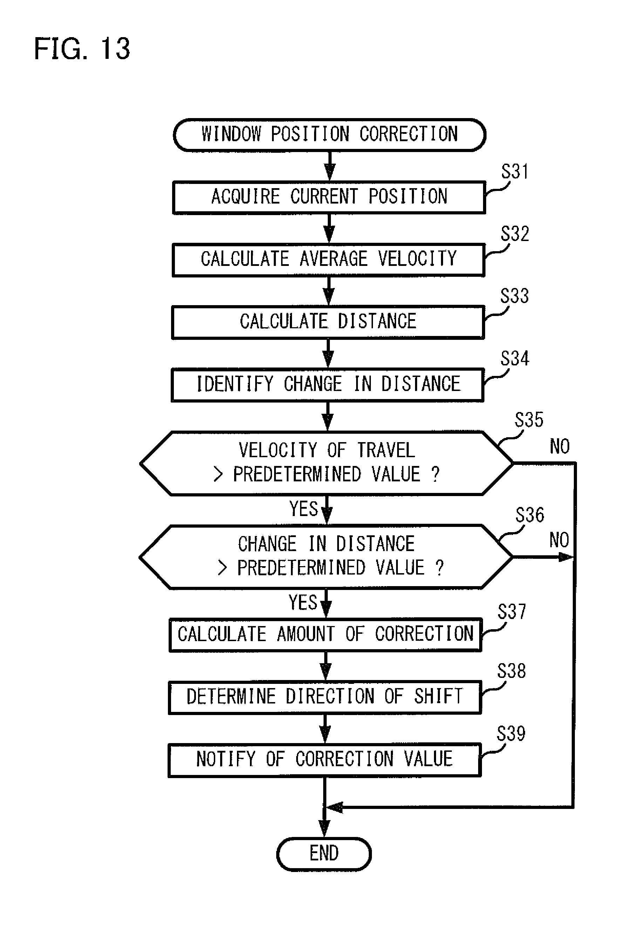

Fig. 13 is a flowchart illustrating the window position correction of the second embodiment. The processing in Fig. 13 will be described below with reference to the step number.

Step S31: The current position acquiring portion 329A acquires the information on the current position of the mobile station 30, which is measured by the GPS, from the position calculating portion 37.

Step S32: The average velocity calculating portion 329B calculates the average velocity of travel of the mobile station 30 from the information on the current position acquired by the current position acquiring portion 329A in step S31 and the positional information acquired in the past.

Step S33: On the basis of the information on the current position acquired by the current position acquiring portion 329A in step S31 and the information on the position of the wireless base station 20, the distance comparing portion 329C calculates the distance between them. Notably, the position of the wireless base station 20 may be extracted in advance from the control information informed by the wireless base station 20, for example.

Step S34: The distance comparing portion 329C compares the current distance calculated in step S33 and the distance calculated in the past and identifies the change in distance between the mobile station 30 and the wireless base station 20. For example, the distance comparing portion 329C acquires the amount of change by subtracting the distance upon last wake-up from the current distance.

Step S35: The correction value calculating portion 329D determines whether the average velocity of travel calculated by the average velocity calculating portion 329D in step S32 is larger than a predetermined value or not. If the average velocity of travel is larger than the predetermined value, the processing moves to step S36. If the average velocity of travel is equal to or smaller than the predetermined value, it is determined that the correction on the window position is not necessary. Then, the amount of correction is regarded as zero, and the processing ends.

Step S36: The correction value calculating portion 329D determines whether the amount of change in distance between the mobile station 30 and the wireless base station 20, which is identified by the distance comparing portion 329C in step S34, is larger than a predetermined value or not. If the amount of change in distance is larger than the predetermined value, the processing moves to step S37. If the amount of change in distance is equal to or smaller than the predetermined value, it is determined that the correction on the window position is not necessary. Then, the amount of correction is regarded as zero, and the processing ends.

Step S37: The correction value calculating portion 329D calculates the amount of correction for the window position (which is the amount of shift of the window) from the average velocity of travel calculated by the average velocity calculating portion 329B in step S32. The amount of correction for the window position may include, as descried according to the first embodiment, the amount of correction corresponding to the change in propagation delay and the amount of correction corresponding to the Doppler effect. In this case, the correction value calculating portion 329D acquires the Doppler frequency deviation from the average velocity of travel.

Step S38: The correction value calculating portion 329D determines the positive or negative correction value (the direction of shift of the window) from the tendency of increase or decrease in distance identified by the distance comparing portion 329C in step S34. In other words, the correction value calculating portion 329D shifts it in the direction for earlier timing when the distance decreases and shifts it in the direction for later timing when the distance increases.

Step S39: The correction value calculating portion 329D outputs the correction value determined by the amount of correction calculated in step S37 and the direction of correction determined in step S38 to the path detecting portion 325. Thus, the window position is corrected from the position upon path detection before the sleep, the window position after the correction is handled as the position for the path detection upon next wake-up.

In this way, the path detection control portion 329 grasps the state of travel of the mobile station 30 before the receiving portion 32 sleeps. More specifically, the velocity of travel and the direction of travel with respect to the wireless base station of the mobile station 30 are calculated. Then, the path detection control portion 329 acquires the amount of shift of the window from the velocity of travel and determines the direction of shift of the window from the direction of travel. However, if the velocity of travel is small enough or if the amount of change in distance is small enough, it is estimated that the change in path timing during the sleep period is small. Then, the window position is not corrected.

Notably, the processing relating to the velocity of travel in steps S32, S35 and S37 and the processing relating to the direction of travel in steps S33, S34, S36 and S38 may be performed in parallel. In this case, if it is determined that the velocity of travel is equal to or smaller than a predetermined value or that the amount of change in distance is equal to or smaller than a predetermined value, the subsequent processing may be aborted, and the correction value may be determined as zero.

By using the mobile station 30 as described above, the similar effects as those of the mobile station 10 according to the first embodiment can be acquired. In other words, the window position can be corrected properly for the time when the path detection is restarted after a lapse of the sleep period. Therefore, even when there is a possibility that the path timing changes largely during the sleep period, the probability of the failure in path detection after a lapse of the sleep period can be reduced. Furthermore, the mobile station 30 according to the second embodiment can grasp the state of travel more accurately on the basis of the current position of the mobile station 30, which can enhance the accuracy of correction.

Having used the GPS for measuring the current position of the mobile station 30, other methods may be applied to measure the current position. For example, AFLT (Advanced Forward Link Trilateration) may be applied to measure the current position by the mobile station 30. In other words, the mobile station 30 may capture the radio waves (or wireless signals) from plural wireless base stations and measure the times of arrival, and, on the basis of the difference in time of arrival, identify the position relationship between the plural wireless base stations and the mobile station 30. The use of AFLT allows the mobile station 30 to grasp the current position without receiving the GPS signal.

The method for determining the velocity of travel and the direction of travel may be a combination of the method described according to the first embodiment and the method described according to the second embodiment. For example, the velocity of travel may be determined on the basis of the phase difference among pilot signals and the direction of travel is determined on the basis of the change in current position. The velocity of travel may be determined on the basis of the change in current position and the direction of travel is determined on the basis of the change in reception level.

Third Embodiment

Next, a third embodiment will be described. The differences from the first embodiment will be mainly described, and the description on the similar matters will be omitted.

The wireless communication system according to the third embodiment applies orthogonal frequency division multiple access (OFDMA) as a communication method for downlink communication. It further applies single-carrier frequency division multiple access (SC-FDMA) as a communication method for uplink communication. The examples of the wireless communication system may include a cellular phone system called LTE (Long Term Evolution). The wireless communication system according to the third embodiment includes a mobile station and a wireless base station, like the wireless communication system according to the first embodiment indicated in Fig. 2.

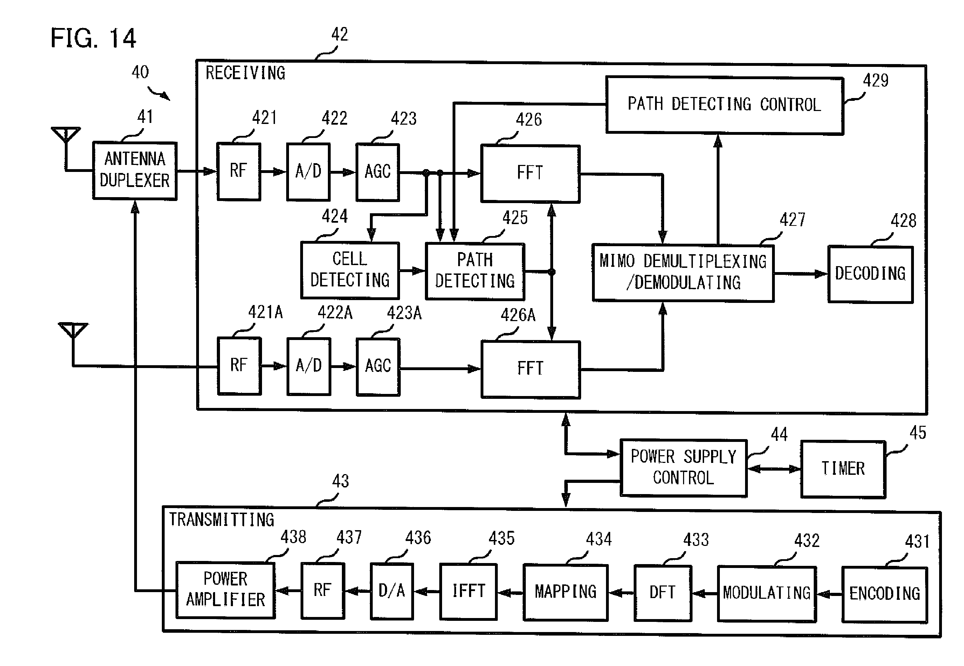

Fig. 14 is a block diagram illustrating a mobile station of the third embodiment. A mobile station 40 according to the third embodiment includes an antenna duplexer 41, a receiving portion 42, a transmitting portion 43, a power supply control portion 44 and a timer portion 45. Notably, Fig. 14 mainly illustrates the modules relating to the intermittent reception function and does not illustrate the other modules as required, among the modules included in the mobile station 40.

The antenna duplexer 41 demultiplexes a receive signal and a transmit signal so that one of two antennas included in the mobile station 40 can be used for both reception and transmission. The antenna duplexer 41 outputs the receive signal acquired through the antenna to the receiving portion 42. The antenna duplexer 41 causes the antenna to output the transmit signal acquired from the transmitting portion 43. Notably, while, in the mobile station 40, one of the two antennas is dedicated to the reception, the antenna may be used for both reception and transmission.

The receiving portion 42 demodulates and decodes the receive signals acquired from the two antennas. The receiving portion 42 includes RF portions 421 and 421A, A/D converting portions 422 and 422A, AGC portions 423 and 423A, a cell detecting portion 424, a path detecting portion 425, FFT (Fast Fourier Transform) portions 426 and 426A, a MIMO (Multiple Input Multiple Output) demultiplexing and demodulating portion 427, a decoding portion 428 and a path detection control portion 429.

The functions of the RF portions 421 and 421A, A/D converting portion 422 and 422A and AGC portion 423 and 423A are similar to those of the RF portion 121, A/D converting portion 122 and AGC portion 123 according to the first embodiment indicated in Fig. 3. However, the mobile station 40 has two sets of those modules. The RF portion 421, A/D converting portion 422 and AGC portion 423 processes a receive signal from the antenna connected to the antenna duplexer 41. The RF portion 421A, A/D converting portion 422A and AGC portion 423A processes a receive signal from the other receive-only antenna.

The cell detecting portion 424 acquires a receive signal from the AGC portion 423 and performs cell search thereon. More specifically, the cell detecting portion 424 detects the correlation on the signal on the synchronization channel included in a receive signal by using the candidates for scramble sequence. Then, the cell detecting portion 424 identifies the accessible cell and the scramble sequence used in the cell and notifies the path detecting portion 425 of the cell search result.

The path detecting portion 425 acquires the receive signal from the AGC portion 423 and performs path detection (or path search) thereon. In other words, the path detecting portion 425 detects the correlation on the receive signal on the basis of the cell search result notified from the cell detecting portion 424. At that time, the detection is performed within the range of the preset window. Then, the path detecting portion 425 identifies the path timing from the correlation detection result and notifies the FFT portions 426 and 426A of it.

Notably, as described according to the first embodiment, the position of the window for performing the path detection by the path detecting portion 425 is corrected in accordance with the path detection result properly. The position of the window before the sleep is estimated and is corrected, and the position after the estimation and correction is set as the position of the window for performing the path detection after the wake-up.

The FFT portions 426 and 426A acquire receive signals from the AGC portions 423 and 423A and perform fast Fourier transformation thereon on the basis of the path timing notified from the path detecting portion 425. In other words, the FFT portions 426 and 426A extract a signal in a predetermined time width from receive signals in a time domain on the basis of the path timing and transform them to the signals in a frequency domain (which are signals exhibiting the frequency component included in the receive signal). Then, the FFT portions 426 and 426A outputs the receive signals transformed to those in the frequency domain to the MIMO demultiplexing and demodulating portion 427. Notably, the FFT portions 426 and 426A may apply a transformation algorithm excluding the fast Fourier transformation as the method for the transformation from the time domain to the frequency domain.

The MIMO demultiplexing and demodulating portion 427 performs channel estimation, channel compensation and MIMO demultiplexing and demodulating on the receive signals after the frequency transformation, which are acquired from the FFT portions 426 and 426A. More specifically, first of all, the MIMO demultiplexing and demodulating portion 427 estimates the amount of phase rotation (phase difference) caused by the influence from the propagation path, such as fading, for the receive signals. Then, in accordance with the estimated phase differences, the channels are compensated.

Next, the MIMO demultiplexing and demodulating portion 427 performs the matrix operation by using the matrix according to the state of the propagation path on the compensated receive signals and reproduces the signals output from the transmitting antennas of transmitting apparatus. In other words, the signals, which are superimposed on the receive signals and output from the different transmitting antennas, are demultiplexed. After that, the MIMO demultiplexing and demodulating portion 427 demodulates the receive signals after the MIMO demultiplexing. The modulation method may be QPSK (Quadrature Phase Shift Keying) or 16QAM (Quadrature Amplitude Modulation), for example. Then, the MIMO demultiplexing and demodulating portion 427 outputs the demodulated signal to the decoding portion 428.

The decoding portion 428 decodes the demodulated signal acquired from the MIMO demultiplexing and demodulating portion 427. The encoding method to be used in system may be agreed in advance between the mobile station 40 and the wireless base station 20, for example. The decoding portion 428 outputs the decoded data to the module (not indicated) that processes the data.

The path detection control portion 429 controls the position of the window for the path detecting portion 425 when the mobile station 40 performs the intermittent reception. More specifically, the path detection control portion 429 acquires the information on the estimated phase difference from the MIMO demultiplexing and demodulating portion 427 and estimates the velocity of travel of the mobile station 40 from the phase difference. The path detection control portion 429 acquires the information on the reception level of the demodulated signal from the MIMO demultiplexing and demodulating portion 427 and estimates the direction of travel of the mobile station 40 with respect to the wireless base station 20 from the change in reception level. Then, the path detection control portion 429 estimates the change in path timing during the sleep period on the basis of the velocity of travel and the direction of travel of the mobile station 40 before the sleep and causes the path detecting portion 425 to correct the window position.

The transmitting portion 43 encodes and modulates the data to be transmitted to the wireless base station 20. The transmitting portion 43 includes an encoding portion 431, a modulating portion 432, a DFT (Discrete Fourier Transform) portion 433, a mapping portion 434, an IFFT (Inverse Fast Fourier Transform) portion 435, a D/A converting portion 436, an RF portion 437 and a power amplifier 438.

The encoding portion 431 acquires the data to be transmitted to the wireless base station 20 from the module (not indicated) that processes the data and then encodes the data. The encoding method to be used in system may be agreed in advance between the mobile station 40 and the wireless base station 20, for example. Then, the encoding portion 431 outputs the acquired encoded data to the modulating portion 432.

The modulating portion 432 performs digital modulation on the encoded data acquired from the encoding portion 431. The modulation method may be QPSK or 16QAM, for example. Then, the modulating portion 432 outputs the modulated signal to the DFT portion 433.

The DFT portion 433 performs discrete Fourier transform on the modulated signal acquired from the modulating portion 432. The transformation algorithm may be FFT, for example. By performing the discrete Fourier transform, the modulated signal can be distributed to plural subcarriers, and the plural subcarriers can be used as a single carrier. Then, the DFT portion 433 outputs the modulated signal after the discrete Fourier transform to the mapping portion 434.

The mapping portion 434 associates the modulated signal acquired from the DFT portion 433 with a subcarrier. Then, the mapping portion 434 outputs the modulated signal for each subcarrier to the IFFT portion 435.

The IFFT portion 435 acquires the modulated signal for each subcarrier from the mapping portion 434 and performs inverse fast Fourier transform thereon. In other words, the IFFT portion 435 transforms the signal in the frequency domain to the signal in the time domain. Then, the IFFT portion 435 outputs the transmit signal transformed to the signal in the time domain to the D/A converting portion 436. Notably, the method for transforming from the frequency domain to the time domain to be used by the IFFT portion 435 may be any transformation algorithm excluding inverse fast Fourier transform.

The functions of the D/A converting portion 436, RF portion 437 and power amplifier 438 are similar to those of the D/A converting portion 133, RF portion 134 and power amplifier 135 according to the first embodiment indicated in Fig. 3. The transmit signal amplified by the power amplifier 438 is output from the antenna through the antenna duplexer 41.

The functions of the power supply control portion 44 and timer portion 45 are similar to those of the power supply control portion 14 and timer portion 15 according to the first embodiment indicated in Fig. 3. In other words, the power supply control portion 44 controls the power supply to the receiving portion 42 so as to cause the receiving portion 42 to sleep and wake-up intermittently until a downlink communication occurs.

Also with the mobile station 40 as described above, the similar intermittent-reception control to that of the mobile station 10 according to the first embodiment can be implemented. Thus, the window position can be corrected properly in order to restart the path detection after a lapse of the sleep period. As a result, even though there is a possibility that the path timing changes largely during the sleep period, the probability of failing in the path detection after a lapse of the sleep period can be reduced.

As the method for determining the velocity of travel and the direction of travel, the method described according to the second embodiment is applicable. For example, a GPS receiving portion may be provided in the mobile station 40, and the velocity of travel may be determined on the basis of the change in current position. Alternatively, the direction of travel may be determined on the basis of the change in current position.

**Claims**

1. A receiving apparatus for stopping intermittently reception processing including path detection, the receiving apparatus comprising:

   a control portion for shifting a window having a predetermined time width indicating a section in which the path detection is performed from a position before a reception stop in accordance with a state of travel of the receiving apparatus before the reception stop; and
   a path detecting portion for performing the path detection processing on a receive signal within the section expressed by the window after shifted by the control portion, after a lapse of the reception stop period.

2. The receiving apparatus according to claim 1, wherein the control portion acquires an amount of the shift from the position before the reception stop on a basis of a travel velocity before the reception stop of the receiving apparatus.

3. The receiving apparatus according to claim 2, wherein the control portion acquires the amount of the shift in accordance with an amount of change in distance between a wireless base station and the receiving apparatus and the amount of the shift in accordance with a Doppler frequency deviation on the basis of the travel velocity before the reception stop of the receiving apparatus.

4. The receiving apparatus according to claim 2, wherein the control portion acquires the Doppler frequency deviation from a receive signal before the reception stop and estimates the travel velocity from the Doppler frequency deviation.

5. The receiving apparatus according to claim 2, wherein the control portion acquires the travel velocity on a basis of an amount of change in current position of the receiving apparatus.

6. The receiving apparatus according to any preceding claim, wherein the control portion determines a direction of the shift which the window is shifted in one direction of earlier in time and later in time from the position before a reception stop on a basis of a direction of travel with respect to a wireless base station of the receiving apparatus before a reception stop.

7. The receiving apparatus according to claim 6, wherein the control portion estimates the direction of travel on a basis of change in reception level of receive signals before the reception stop.

8. The receiving apparatus according to claim 6, wherein the control portion acquires the direction of travel on a basis of change in current position of the receiving apparatus.

9. The receiving apparatus according to any preceding claim, wherein the control portion shifts a position of the window before the reception stop, the path detecting portion stores positional information of the window after the window shifts in a predetermined storage medium, before the reception stop, and performs the path detection on a basis of the positional information stored in the predetermined storage medium after a lapse of the reception stop period.

10. A communication control method for stopping intermittently reception processing including path detection, the communication control method comprising:

    shifting a window having a predetermined time width indicating a section in which the path detection is performed from a position before a reception stop in accordance with a state of travel of the receiving apparatus before the reception stop; and
    performing the path detection processing on a receive signal within the section expressed by the window after shifted by the control portion, after a lapse of the reception stop period.

FIG. 1

RECEIVING 1

PATH DETECTING 1A ← CONTROL 1B

RECEIVING

1C

TIME:T

STOPPING

TIME:T

RECEIVING

1C

TIME:T

FIG. 2

EP 2 164 182 A1

**FIG. 3**

EP 2 164 182 A1

# FIG. 4

EP 2 164 182 A1

# FIG. 5

PATH DETECTION CONTROL — 129

CORRECTION ← CORRECTION VALUE CALCULATING (129E)

VELOCITY ESTIMATING (129B)

RECEPTION LEVEL COMPARING (129D)

PHASE DIFFERENCE ACQUIRING (129A)

RECEPTION LEVEL ACQUIRING (129C)

(FROM 127)

(FROM 127A)

EP 2 164 182 A1

# FIG. 6

```
        ┌─────────────────┐
        │  INTERMITTENT   │
        │   RECEPTION     │
        └────────┬────────┘
                 │◄──────────────────────────────────┐
                 ▼                          S11       │
        ┌─────────────────┐                           │
        │ STOP POWER SUPPLY│                           │
        └────────┬────────┘                           │
    S12          │        ◄────────────┐              │
        ┌─────────────────┐   NO        │             │
        ◄   TIME OVER ?   ─────────────┘              │
        └────────┬────────┘                           │
                 │ YES              S13                │
                 ▼                                     │
        ┌─────────────────┐                           │
        │RESTART POWER SUPPLY                          │
        └────────┬────────┘                           │
  S16            ▲───────────────┐                    │
   ┌──────────────┐   ┌─────────────────┐  S14        │
   │ CELL SEARCH  │   │  PATH DETECTING │             │
   └──────▲───────┘   └────────┬────────┘             │
          │       NO           ▼         S15          │
          └────────────◄   SUCCEED ?                  │
                            └────┬────┘                │
                                 │ YES                 │
                                 ▼          S17        │
                        ┌─────────────────┐            │
                        │     CORRECT      │            │
                        │  WINDOW POSITION │            │
                        └────────┬────────┘            │
                                 │         S18         │
                                 ▼                S19  │
                    ┌─────────────────┐  NO  ┌──────────────────┐
                    │  DOWNLINK        ─────►│ ESTIMATE AND CORRECT
                    │ COMMUNICATION    │     │  WINDOW POSITION │
                    │   OCCUR ?        │     └──────────────────┘
                    └────────┬────────┘
                             │ YES          S20
                             ▼
                    ┌─────────────────┐
                    │INTERMITTENT RECEPTION
                    │   IS CANCELLED   │
                    └────────┬────────┘
                             ▼
                        ┌─────────┐
                        │   END   │
                        └─────────┘
```

FIG. 7

```
                    ┌─────────────────────────────────┐
                    │  WINDOW POSITION CORRECTION     │
                    └─────────────────────────────────┘
                                   │
                    ┌─────────────────────────────────┐  S21
                    │     ACQUIRE PHASE DIFFERENCE     │
                    └─────────────────────────────────┘
                                   │
                    ┌─────────────────────────────────┐  S22
                    │   ESTIMATE FREQUENCY DEVIATION   │
                    └─────────────────────────────────┘
                                   │
                    ┌─────────────────────────────────┐  S23
                    │    ESTIMATE VELOCITY OF TRAVEL   │
                    └─────────────────────────────────┘
                                   │
                    ┌─────────────────────────────────┐  S24
                    │       ACQUIRE RECEPTION LEVEL    │
                    └─────────────────────────────────┘
                                   │
                  ┌───────────────────────────────────┐  S25
                  │   IDENTIFY CHANGE IN RECEPTION LEVEL │
                  └───────────────────────────────────┘
                                   │
                  ╱─────────────────────────────────╲  S26      NO
                 ╱       VELOCITY OF TRAVEL          ╲──────────→
                 ╲     > PREDETERMINED VALUE ?       ╱
                  ╲─────────────────────────────────╱
                           YES │
                  ╱─────────────────────────────────╲  S27      NO
                 ╱     CHANGE OF RECEPTION LEVEL     ╲──────────→
                 ╲     > PREDETERMINED VALUE ?       ╱
                  ╲─────────────────────────────────╱
                           YES │
                    ┌─────────────────────────────────┐  S28
                    │   CALCULATE AMOUNT OF CORRECTION │
                    └─────────────────────────────────┘
                                   │
                    ┌─────────────────────────────────┐  S29
                    │    DETERMINE DIRECTION OF SHIFT  │
                    └─────────────────────────────────┘
                                   │
                    ┌─────────────────────────────────┐  S30
                    │     NOTIFY OF CORRECTION VALUE   │
                    └─────────────────────────────────┘
                                   │
                            ┌──────────┐
                            │   END    │
                            └──────────┘
```

FIG. 8

INTERMITTENT RECEPTION MODE

NORMAL MODE

PERIOD:T

SLEEP

PI CHECK
(NOTHING)

PERIOD:T

SLEEP

PI CHECK
(NOTHING)

PERIOD:T

SLEEP

PI CHECK
(EXISTENCE)

NORMAL MODE

# FIG. 9

[ST11]

ESTIMATING AND CORRECTING

TIME:T

[ST12]

TIME:T

SLEEP

[ST13]

TIME:T

CORRECTING

[ST14]

TIME:T

# FIG. 10

[ST21]

ESTIMATING AND CORRECTING

[ST22]

SLEEP

[ST23]

CORRECTING

[ST24]

FIG. 11

EP 2 164 182 A1

## FIG. 12

(FROM 37)

329

PATH DETECTION CONTROL

329A

CURRENT POSITION
ACQUIRING

329B

AVERAGE VELOCITY
CALCULATING

329C

DISTANCE
COMPARING

329D

CORRECTION VALUE CALCULATING

CORRECTION VALUE

EP 2 164 182 A1

# FIG. 13

WINDOW POSITION CORRECTION

ACQUIRE CURRENT POSITION — S31

CALCULATE AVERAGE VELOCITY — S32

CALCULATE DISTANCE — S33

IDENTIFY CHANGE IN DISTANCE — S34

VELOCITY OF TRAVEL > PREDETERMINED VALUE ? — S35 — NO

YES

CHANGE IN DISTANCE > PREDETERMINED VALUE ? — S36 — NO

YES

CALCULATE AMOUNT OF CORRECTION — S37

DETERMINE DIRECTION OF SHIFT — S38

NOTIFY OF CORRECTION VALUE — S39

END

# FIG. 14

RECEIVING 42

ANTENNA DUPLEXER 41

RF 421 → A/D 422 → AGC 423

CELL DETECTING 424

PATH DETECTING 425

FFT 426

PATH DETECTING CONTROL 429

MIMO DEMULTIPLEXING /DEMODULATING

DECODING 428

RF 421A → A/D 422A → AGC 423A → FFT 426A

POWER SUPPLY CONTROL 44

TIMER 45

TRANSMITTING 43

POWER AMPLIFIER 438 ← RF 437 ← D/A 436 ← IFFT 435 ← MAPPING 434 ← DFT 433 ← MODULATING 432 ← ENCODING 431

427

EP 2 164 182 A1

31

**EUROPEAN SEARCH REPORT**

Application Number

EP 09 16 6344

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 261 144 A (ERICSSON TELEFON AB L M [SE]) 27 November 2002 (2002-11-27) | 1,2,4 | INV. H04B1/707 H04J11/00 |
| Y | * paragraph [0002] - paragraph [0005]; figure 3 * <br> * paragraph [0025] - paragraph [0040] * <br> * paragraph [0044] * <br> ----- | 3 | |
| X | WO 00/33594 A (ERICSSON INC [US]) 8 June 2000 (2000-06-08) | 1,2,5,6, 8,9 | |
| Y | * page 8, line 23 - page 10, line 14 * <br> ----- | 3,7 | |
| Y | WO 98/59515 A (TELIA AB [SE]; ANDERSIN MICHAEL [SE]) 30 December 1998 (1998-12-30) <br> * abstract * <br> ----- | 7 | |

| | TECHNICAL FIELDS SEARCHED (IPC) |
|---|---|
| | H04B H04J |

The present search report has been drawn up for all claims

| Place of search | Date of completion of the search | Examiner |
|---|---|---|
| Munich | 3 December 2009 | Giglietto, Massimo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 09 16 6344

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2009

| Patent document cited in search report | | Publication date | Patent family member(s) | | Publication date |
|---|---|---|---|---|---|
| EP 1261144 | A | 27-11-2002 | NONE | | |
| WO 0033594 | A | 08-06-2000 | AT | 279082 T | 15-10-2004 |
| | | | AU | 3101200 A | 19-06-2000 |
| | | | CN | 1329800 A | 02-01-2002 |
| | | | DE | 69920955 D1 | 11-11-2004 |
| | | | EP | 1135944 A1 | 26-09-2001 |
| | | | JP | 3498056 B2 | 16-02-2004 |
| | | | JP | 2002532033 T | 24-09-2002 |
| | | | US | 6212398 B1 | 03-04-2001 |
| WO 9859515 | A | 30-12-1998 | SE | 517660 C2 | 02-07-2002 |
| | | | SE | 9702390 A | 24-12-1998 |

EPO FORM P0459

For more details about this annex : see Official Journal of the European Patent Office, No. 12/82

**REFERENCES CITED IN THE DESCRIPTION**

**Patent documents cited in the description**

- JP 2004040613 A
- JP 2005073102 A
- JP 2007174329 A